# EUROPÄISCHE PATENTANMELDUNG

(11) **EP 1 523 141 A1**
(43) Veröffentlichungstag der Anmeldung: **13.04.2005**
(21) Anmeldenummer: 04018668.6
(22) Anmeldetag: 06.08.2004
(51) Int. Cl.: H04L 12/58, G06F 17/60

(54) **Verfahren und Vorrichtung zur automatischen Existenzmeldung von BBC-Empfängern**

(30) Priorität: 04.10.2003 DE 10346155
(71) Anmelder: Deutsche Telekom AG, 53113 Bonn (DE)
(72) Erfinder: Hermann, Roland, Dipl.-Ing., 53117 Bonn (DE)

(57) **Zusammenfassung**

Verfahren zur Organisation des Austausches elektronischer Dateien, insbesondere der Austausches von elektronischen Postsendungen ("E-mail"), wobei ein Absender eine adressierte Originaldatei mit einem Anwenderprogramm von einem ihm zugänglichen Computer über ein Netz an einen am Netz angeschlossenen zentralen Rechner ("Mail-Server") schickt, wobei der Mail-Server die Originaldatei dem Empfänger zustellt, wobei der Absender über eine Funktion des Anwenderprogramms eine Kopie der Originaldatei erstellt, die einem sekundären Adressaten zugestellt wird, wobei der Absender mit Anwahl einer "BCC"-Option ("Blind Carbon Copy") die Möglichkeit erhält, einen für den Empfänger ersichtlichen Vermerk in der Originaldatei bezüglich der erstellten Kopie zu vermeiden, wobei die Originaldatei von einem Kontrollprogramm daraufhin untersucht wird, ob die BCC Option vom Absender angewählt wurde, und wobei bei erfolgter Anwahl die Originaldatei mit einem für den Empfänger ersichtlichen Hinweis auf die erstellte Kopie versehen wird.

## Beschreibung

Die vorliegende Erfindung betrifft ein Verfahren zur Organisation des Austausches elektronischer Dateien, insbesondere der Austausches von elektronischen Postsendungen ("E-mails"), wobei ein Absender eine adressierte Originaldatei mit einem Anwenderprogramm von einem ihm zugänglichen Computer über ein Netz an einen am Netz angeschlossenen zentralen Rechner ("Mailserver") schickt, wobei der Mailserver die Originaldatei dem Empfänger zustellt, wobei der Absender über eine Funktion des Anwenderprogramms eine Kopie der Originaldatei erstellt, die einem sekundären Adressaten zugestellt wird, und wobei der Absender mit Anwahl einer "BCC"-Option ("Blind Carbon Copy") vermeidet, dass in die Originaldatei ein für den Empfänger ersichtlicher Vermerk bezüglich der Adresse des sekundären Adressaten aufgenommen wird. Die Erfindung betrifft gleichfalls einen Computer zur Umsetzung des Verfahrens.

Es sind Anwenderprogramme, wie beispielsweise MS-Outlook, bekannt, die eine elektronische Kommunikation zwischen mehreren über ein Netz, beispielsweise über das globale Internet oder über ein lokales Intranet, zusammengeschlossenen Computern unterstützen. Diese bieten die Option, an Empfänger versendete Nachrichten ("E-mails") zu kopieren und zeitgleich an weitere Adressaten zu versenden. Diese Funktion ist als "Carbon Copy" oder "CC" bekannt, wobei bei der Anwahl dieser Funktion der Empfänger der Originalnachricht davon in Kenntnis gesetzt wird, an wen solche Kopien verschickt wurden. Um diese Mitteilung an den Empfänger zu unterdrücken gibt es eine andere, mit "Blind Carbon Copy" oder "BCC" bezeichnete Funktion, die der Absender im Programm anwählen kann. Der Empfänger der originalen E-mail bleibt dann über versendete Kopien in Unkenntnis.

In großen Betrieben, deren Mitarbeiter von Arbeitsplatz zu Arbeitsplatz über ein Netz kommunizieren, ist Vertrauen und eine gewisse Transparenz Voraussetzung für den Arbeitsfrieden. Daher haben sich viele Arbeitgeber entschieden, Regeln für die elektronische Kommunikation aufzustellen, wobei eine Regel das Verbot der Nutzung der BCC-Option umfassen kann. Jeder Mitarbeiter sollte also sicher sein können, dass hinter seinem Rücken keine Kopien der an ihn gerichteten Nachrichten verteilt werden. Auch wenn sich der Großteil der Mitarbeiter an dieses Verbot hält, so kann die Einhaltung letztendlich weder gewährleistet noch kontrolliert werden.

Aufgabe der vorliegenden Erfindung ist es nunmehr, ein Verfahren zu schaffen, das sich mit einfachen Mitteln kostengünstig umsetzen lässt und das den elektronischen Verkehr bezüglich der Versendung von Kopien transparent macht. Eine weitere Aufgabe liegt darin, ein System zur Umsetzung des Verfahrens zu schaffen.

Diese Aufgaben werden durch das Verfahren mit den kennzeichnenden Merkmalen des Anspruch 1 und den Computer mit den kennzeichnenden Merkmalen des Anspruch 8 gelöst.

Der erfindungsgemäße Grundgedanke liegt im wesentlichen darin, dass die über das an sich für den Nutzer unzugängliche Anwenderprogramm zur Verfügung gestellte Option des "BCC" von einem zusätzlichen "Kontrollprogramm" entweder vollständig aufgehoben oder zumindest insofern abgeschwächt wird, als der Empfänger auf jeden Fall eine automatisch generierte Information bezüglich anonym verschickter Nachrichten erhält. Ein solches Kontrollprogramm macht es sich zu nutze, dass jeder Nachricht die Information über die Adressen der Teilnehmer, die offen oder "blind" Kopien bekommen sollen, anhängt. Bei angewählter BCC-Funktion wird die vorhandene Information nur nicht an den Empfänger der Original Nachricht weitergegeben. Erfindungsgemäß wird nun die Originaldatei von dem Kontrollprogramm auf die angewählte BCC Option untersucht, d.h. es wird kontrolliert, ob BCC-Empfänger eingetragen sind. Falls solche Einträge bestehen wird die Originaldatei mit einem für den Empfänger ersichtlichen Hinweis versehen, wobei dieser Hinweis unterschiedlichen Inhalts sein kann. Auf diese Weise ist sichergestellt, dass hinter dem Rücken des Empfängers zumindest nicht zeitgleich Kopien der Originalnachricht an Kollegen versendet werden, während sich der Empfänger der Originalnachricht diesbezüglich in Sicherheit wähnt.

Auch wenn es technisch möglich ist, die "anonymen" Empfänger der Blindcopies entgegen dem Willen des Absenders dennoch zu veröffentlichen, so könnte eine solche generelle Umgehung der BCC-Funktion den Arbeitsfrieden ähnlich belasten, da es nun unter den enttarnten Mitarbeitern wieder zu Defiziten an Information, da diese nicht wissen, dass sie entdeckt sind. Auch müssten sich die Mitarbeiter auch entmündigt vorkommen. Zudem sind Situationen vorstellbar, in denen die Versendung von Blindcopies sinnvoll sein kann. Dies ist beispielsweise dann der Fall, wenn Lawineneffekte bei der Versendung von E-mails vermieden werden sollen. Aus diesem Grunde ist es vorteilhaft, wenn der Hinweis lediglich auf die Tatsache hinweist, dass eine Kopie erstellt wurde, während der Adressat der Kopie jedoch anonym bleibt. Nun weiß der Empfänger, dass der Absender Kopien verschickt hat und kann sich bei Bedarf persönlich an ihn wenden, um ihn zur Rede zu stellen. Der Absender hat dann die Möglichkeit sich zu rechtfertigen und eventuell die Namen der Empfänger der Blindcopies nennen. Dabei könnte die Rechtfertigung auch schon Teil des Hinweises an den Empfänger sein. Eine solche Art der Anwendung würde das Verantwortungsgefühl der Mitarbeiter im Umgang mit der BCC-Funktion stärken.

Besonders zweckmäßig ist der Hinweis auf Blindkopien dann, wenn die Originalnachricht in verschlüsselter Form versendet wurde, der Empfänger also automatisch davon ausgehen muss, dass er als Inhaber des Entschlüsselungscodes alleiniger Adressat der Nachricht ist.

Es gibt mehrere Möglichkeiten, die Erfindung umzusetzen. So wäre es einerseits möglich, das Kontrollprogramm auf dem Computer eines jeden Mitarbeiters lokal zu installieren. Das hat jedoch den Nachteil, dass der Installationsaufwand recht hoch ist und dass das Programm dadurch dem Mitarbeiter in gewisser Weise zugänglich würde. Er könnte dann eventuell durch ein Verhinderungsprogramm die Funktion des Kontrollprogramms außer Kraft setzen. Zudem ließe sich ein solches dezentrales Kontrollprogramm schwieriger umsetzen, da es nur bedingt Zugriff auf zentral verwaltete Dateien hat. Es ist daher von Vorteil, wenn das Kontrollprogramm auf dem zentralen Mail-Server realisiert ist. An dieser zentralen Stelle kann es dann eine mit der BCC-Option versendete Datei erkennen und sie vor der Zustellung mit dem Hinweis auf die erstellte Kopie versehen. Der Mail-Server bietet sich an, da er gegen Manipulationen vergleichsweise immun ist und ehedem in seiner zentralen Stellung die Kontrolle über den Mail-Verkehr hat. Zudem ist die zentrale Pflege und Wartung des Kontrollprogramms unkompliziert.

Auf dem Server wird erfindungsgemäß das Kontrollprogramm installiert, das den Versandt der E-mails kontrolliert und alle eingehenden E-mails auf eventuell vorhandene BCC Einträge untersucht. Vor der Weiterleitung wird eine mit BCC Eintrag versehene Nachricht markiert. Dann besteht die Möglichkeit, sie mit einem für den Empfänger lesbaren Hinweis auf das Vorhandensein und/oder auf den Inhalt des BCC Eintrages versehen. Dies kann insbesondere dann von großem Vorteil sein, wenn die Nachricht verschlüsselt wurde. In einer vorteilhaften Ausführungsform wird daher die Originalnachricht zunächst auf eine eventuelle Verschlüsselung hin untersucht, bevor der Hinweis auf die Blindkopien in die Originaldatei, also in die E-Mail, aufgenommen wird.

Es kann von Vorteil sein, der Wirkung des Kontrollprogramms Grenzen zu setzen und im bedingten Umfang mit BCC-Eintrag versehene Nachrichten zuzulassen. Insbesondere ist das von Vorteil, wenn eine Nachricht nicht an einen internen Kollegen, sondern einen externen Empfänger geschickt wird. Um eine solche Abgrenzung vornehmen zu können, wird eine Art internes Netz ("Intranet") als Gruppe von Adressaten, beispielsweise die Gruppe aller Mitarbeiter, definiert und dem Kontrollprogramm mitgeteilt. Wird nun eine E-mail an einen Empfänger aus dieser Gruppe verschickte, dann wird diese Datei mit dem erfindungsgemäßen Hinweis versehen, wobei in einer an einen Empfänger außerhalb der Gruppe verschickten Datei der sekundäre Adressat in bekannter Weise anonym bleibt.

Jede auf dem Mail-Server eingehende Mail wird somit auf zwei Bedingungen überprüft: Einerseits "Sind BCC Empfänger eingetragen ?" und "Gibt es unter den Nicht BCC-Empfängern auch "Extranet"-Empfänger. Dabei ist die Verknüpfung mit der zweiten Bedingung nur notwendig, falls beim Vorliegen von Extranet-Empfängern keine Rückmeldung des BCC Gebrauchs erwünscht ist.

Bei der Zusammenfassung einer Gruppe ist es besonders vorteilhaft, wenn Adressaten mit derselben Hostbezeichnung automatisch der Gruppe zugeordnet werden. Dabei ist als Hostbezeichnung diese zu verstehen, die in der Mailadresse mit dem Symbol "@" beginnt. Eine solche Gruppierung ist natürlich nur dann sinnvoll, wenn nur Mitglieder der abgeschlossenen Gruppe Adressen mit derselben Hostbezeichnung haben. In einer anderen vorteilhaften Ausführungsform werden alle über ein Intranet verbundenen Adressaten automatisch der Gruppe zugeordnet. In diesen beiden Fällen geschieht die Organisation dieses Dienstes automatisch, ohne dass sich jemand darum kümmern braucht.

Ist die erste Bedingung erfüllt, so kann der Mail-Server automatisch einen Hinweis als Anlage zu der Nachricht generieren etwa mit dem Inhalt: "Automatisch generierte Rückmeldung des Mailservers XY", Uhrzeit, "Diese Mail wurde auch an BCC-Empfänger versandt". Der Hinweis wird dann in das Anlagenverzeichnis der Mail aufgenommen. Dabei kann die erste Bedingung durch weitere technisch umsetzbare Bedingungen eingeschränkt oder aufgehoben werden. Die Prüfung der Bedingungen wird vorteilhafterweise von jedem Mail Server, der BCC zulässt, technisch durchgeführt.

## Patentansprüche

1. Verfahren zur Organisation des Austausches elektronischer Dateien, insbesondere der Austausches von elektronischen Postsendungen ("E-mail"), wobei ein Absender eine adressierte Originaldatei mit einem Anwenderprogramm von einem ihm zugänglichen Computer über ein Netz an einen am Netz angeschlossenen zentralen Rechner ("Mail-Server") schickt, wobei der Mail-Server die Originaldatei dem Empfänger zustellt, wobei der Absender über eine Funktion des Anwenderprogramms eine Kopie der Originaldatei erstellt, die einem sekundären Adressaten zugestellt wird, und wobei der Absender mit Anwahl einer "BCC"-Option ("Blind Carbon Copy") die Möglichkeit erhält, einen für den Empfänger ersichtlichen Vermerk in der Originaldatei bezüglich der erstellten Kopie zu vermeiden,
**dadurch gekennzeichnet, dass**
die Originaldatei von einem Kontrollprogramm daraufhin untersucht wird, ob die BCC Option vom Absender angewählt wurde, und dass bei erfolgter Anwahl die Originaldatei mit einem für den Empfänger ersichtlichen Hinweis auf die erstellte Kopie versehen wird.

2. Verfahren nach Anspruch 1,
**dadurch gekennzeichnet, dass** der Hinweis lediglich auf die Tatsache hinweist, dass eine Kopie erstellt wurde, während der Adressat der Kopie anonym bleibt.

3. Verfahren nach Anspruch 1 oder 2,
**dadurch gekennzeichnet, dass** das Kontrollprogramm auf dem Server realisiert ist, wobei das Kontrollprogramm eine mit der BCC-Option versendete Datei erkennt und sie vor der Zustellung mit dem Hinweis auf die erstellte Kopie versieht.

4. Verfahren nach einem der vorherigen Ansprüche,
**dadurch gekennzeichnet, dass** eine Gruppe von Adressaten definiert wird, wobei eine an einen Empfänger aus dieser Gruppe verschickte Datei mit dem Hinweis auf die erstellte Kopie versehen wird und wobei eine an einen Empfänger außerhalb der Gruppe verschickte Datei keinen Hinweis erhält.

5. Verfahren nach Anspruch 4,
**dadurch gekennzeichnet, dass** alle Adressaten mit derselben vorher festgelegten Hostbezeichnung automatisch der Gruppe zugeordnet werden.

6. Verfahren nach Anspruch 4 oder 5,
**dadurch gekennzeichnet, dass** alle über ein Intranet verbundenen Adressaten automatisch der Gruppe zugeordnet werden.

7. Verfahren nach einem der vorherigen Ansprüche,
**dadurch gekennzeichnet, dass** die Originaldatei von dem Kontrollprogramm auf eine Verschlüsselung untersucht wird und dass bei Vorliegen einer Verschlüsselung die Originaldatei auf jeden Fall mit einem für den Empfänger ersichtlichen Hinweis auf die erstellten Kopien versehen wird.

8. Computer, insbesondere zur Durchführung eines Verfahrens nach einem der vorherigen Ansprüche,
**gekennzeichnet durch** ein Kontrollprogramm, das den Versandt von elektronischen Nachrichten ("E-mails") kontrolliert und alle eingehenden E-mails auf das Vorhandensein eines BCC Eintrages untersucht, wobei es vor der Weiterleitung eine mit BCC Eintrag versehene Nachricht markiert.

9. Computer nach Anspruch 8,
**dadurch gekennzeichnet, dass** das Kontrollprogramm die E-mail mit einem für den Empfänger lesbaren Hinweis auf das Vorhandensein und/oder den Inhalt des BCC Eintrages versieht.

10. Computer nach Anspruch 8,
**dadurch gekennzeichnet, dass** das Kontrollprogramm die E-mail auf das Vorhandensein einer Veschlüsselung untersucht und im Falle einer verschlüsselten Nachricht mit einem für den Empfänger lesbaren Hinweis auf das Vorhandensein und/oder den Inhalt des BCC Eintrages versieht.
